# FASCICULE DE BREVET EUROPEEN

(11) **EP 1 218 099 B1**
(45) Date de publication et mention de la délivrance du brevet: **06.08.2003**
(21) Numéro de dépôt: 00966265.1
(22) Date de dépôt: 03.10.2000
(51) Int. Cl.: B01J 20/18, B01D 53/04

(54) **ADSORBANTS ZEOLITIQUES LEUR PROCEDE D'OBTENTION ET LEUR UTILISATION POUR LA DECARBONATATION DE FLUX GAZEUX**
ZEOLITHISCHE ADSORBENTIEN,VERFAHREN ZU IHRER HERSTELLUNG UND IHRE VERWENDUNG ZUM ENTFERNEN VON CO2 AUS GASSTRÖMEN
ZEOLITE ADSORBENTS, METHOD FOR OBTAINING THEM AND THEIR USE FOR REMOVING CARBONATES FROM A GAS STREAM

(30) Priorité: 05.10.1999 FR 9912389
(43) Date de publication de la demande: 03.07.2002
(73) Titulaire: CECA S.A., 92800 Puteaux (FR)
(72) Inventeur: GRANDMOUGIN, Marie-Thérèse, F-78100 Saint Germain en Laye (FR); MAYOLET, Francis, F-78120 Rambouillet (FR); ROUET, Jacques, F-27210 Saint Maclou (FR)
(74) Mandataire: Treuil, Claude
(86) Numéro de dépôt international: FR0002739
(87) Numéro de publication internationale: WO01024923

(56) Documents cités:
- EP-A- 0 718 024
- EP-A- 0 930 089
- WO-A-99/46031
- FR-A- 2 766 475

## Description

### DOMAINE TECHNIQUE

Le domaine de l'invention est celui des adsorbants zéolitiques pour la purification de flux gazeux pollués par du dioxyde de carbone, en particulier, à la purification de l'air avant les étapes de séparation N₂/O₂.

### TECHNIQUE ANTERIEURE

La production de gaz purs, en particulier N₂ et O₂ à partir de l'air atmosphérique est une opération industrielle pratiquée à grande échelle et peut faire appel, soit à des procédés cryogéniques, soit à des procédés d'adsorption basés sur le principe de l'adsorption modulée en pression (PSA, mis pour pressure swing adsorption), celui de l'adsorption modulée en température (TSA mis pour temperature swing adsorption) ou une combinaison des deux (PTSA). De plus, de nombreux gaz issus de procédés industriels contiennent des quantités importantes de dioxyde de carbone qu'il convient souvent d'éliminer.

La production de N₂ ou O₂ à partir d'air impose une purification préalable à l'étape proprement dite de séparation. En effet, dans la conduite des procédés cryogéniques, l'eau ou le dioxyde de carbone présents dans l'air d'alimentation peuvent engendrer des bouchages dans les équipements du fait que ces opérations sont menées à des températures très inférieures aux températures de congélation de ces impuretés. Dans les procédés par adsorption, l'eau et le dioxyde de carbone sont plus fortement adsorbés que l'azote et provoquent à la longue un empoisonnement de l'adsorbant, ayant pour conséquence une diminution de la durée de vie espérée.

Dans ces procédés, on emploie très généralement une zéolite de type faujasite (13X dont le rapport Si/Al est supérieur à 1,2) pour assurer l'élimination du dioxyde de carbone, le piégeage de l'eau étant en général effectué sur lit d'alumine placé en amont du lit d'adsorbant zéolitique. La régénération de l'adsorbant est de type PTSA, c'est-à-dire que l'on associe une légère élévation de température vers 150°C à une diminution de pression. Au cours de cette étape, une fraction de gaz épuré produit, qui contient N₂, O₂ et environ 1 % en volume d'argon est envoyée sur les lits d'adsorbants en vue de les régénérer en désorbant CO₂ et H₂O.

Il est connu depuis longtemps que la zéolite X est un adsorbant pour le dioxyde de carbone supérieur au gel de silice ou au charbon actif (US 2.882.244) Ce brevet enseigne également que la sélectivité vis-à-vis de divers adsorbats varie avec la température et la pression.

US 3.885.927 enseigne que l'adsorption de CO₂ peut être effectuée sur une zéolite X échangée à plus de 90 % par du baryum : dans ces conditions, la teneur en CO₂ du gaz à épurer ne dépasse pas 1 000 ppm et la température peut être comprise entre - 40°C et 50°C.

EP 294.588 enseigne que l'on peut également utiliser une zéolite X échangée de préférence à 70 % au strontium pour effectuer cette épuration.

L'influence en adsorption de CO₂ du nombre de cations échangeables sur la zéolite a été étudiée par BARRER et al. dans "MOLECULAR SIEVES" (Soc. Chim. Ind., LONDON, 1968), p. 233 ainsi que par COUGHLAN et al. dans "J.C.S. Faraday", 1, 1975, 71, 1809. Ces études montrent que la capacité d'adsorption de la zéolite pour le CO₂ augmente au fur et à mesure que le rapport Si/Al diminue jusqu'à une limite de 1,2, le domaine inférieur n'ayant pas été exploré.

La zéolite X dont le rapport Si/Al est proche de 1,25 et qui est couramment utilisée est très sélective pour le CO₂ et ce d'autant plus que la température s'abaisse. A des températures voisines de celles de l'ambiante, l'efficacité diminue fortement du fait de la compétition avec l'azote qui est présent en proportions molaires bien supérieures. Le rapport N₂/CO₂ dans l'air ambiant (avec CO₂ ∼ 300 /400 vpm) est de l'ordre de 3 000.

Dans US 5.531.808, on trouve l'enseignement que l'on peut adsorber le CO₂ très efficacement au moyen d'une zéolite de type X ayant un rapport Si/Al inférieur à 1,15 et de préférence égal ou très proche de 1 appelée dans la suite de l'exposé zéolite LSX (mis pour Low Silica X). L'avantage par rapport à la zéolite X classique (Si/Al > 1,2 ) réside dans le fait qu'il n'est plus nécessaire de diminuer la température à l'étape de décarbonatation au moyen d'un groupe froid car l'efficacité de la zéolite est telle que la sélectivité pour le CO₂ par rapport à l'azote reste grande même jusqu'à 50°C.

La demanderesse a constaté que la capacité d'adsorption de CO₂ d'une zéolite NaLSX s'accroît avec le taux d'échange en sodium mais aussi que le gain d'efficacité commence à plafonner quand on atteint des taux d'échange en sodium de l'ordre de 90 % pour des pressions partielles de CO₂ relativement élevées. La demanderesse a par contre démontré dans WO99/46031 qu'un gain très sensible d'efficacité peut être obtenu pour la décarbonatation sous des pressions partielles faibles de CO₂, de l'ordre de 2 mbars, avec les zéolites LSX dont le taux d'échange en sodium (défini comme le rapport molaire entre les ions sodium et les atomes d'aluminium en position tétraédrique, le reste étant du potassium) est d'au moins 98 %.

### EXPOSE DE L'INVENTION

La présente invention a pour objet une nouvelle famille d'adsorbants zéolitiques comprenant un mélange de 5 % à 95 %, et de préférence de 50 à 90 %, en poids d'au moins une zéolite X de rapport Si/Al égal à 1,25 et de 95 à 5 %, et de préférence de 50 à 10 %, en poids d'au moins une zéolite LSX de Si/Al = 1 et dont
- soit au moins 80 % de la somme des sites cationiques échangeables de la totalité des zéolites du mélange est occupé par des cations sodium,
- soit au moins 70 % de la somme des sites cationiques échangeables de la totalité des zéolites du mélange est occupé par des cations strontium,
le reste des sites échangeables pouvant être occupé par des cations choisis parmi les groupes IA, IIA, IIIA du tableau périodique, les ions trivalents de la série des terres-rares ou lanthanides.

Parmi les adsorbants préférés, on citera tout particulièrement ceux dont le taux d'échange global en sodium est supérieur à 90 % et avantageusement supérieur à 98 %. On citera également les mélanges d'adsorbants zéolitiques tels que définis plus haut et échangés à au moins 70 % en strontium dont la majorité des sites cationiques restants est occupée par des ions sodium.

Ces nouveaux adsorbants zéolitiques peuvent se présenter sous forme de poudre mais ils peuvent également être agglomérés sous forme de billes, d'extrudés, de filés, avec 5 à 25, de préférence 5 à 20, parties en poids d'un liant d'agglomération inerte (matière amorphe à caractère cohésif adsorbant très peu le dioxyde de carbone) pour 100 parties en poids de mélange de zéolites X et LSX et de liant.

Les agglomérés sont particulièrement bien adaptés à des utilisations industrielles dans la mesure où leur manipulation lors des opérations de chargement et de déchargement dans l'unité industrielle limite les pertes de charge par rapport à des adsorbants sous forme pulvérulente.

La présente invention a également pour objet le procédé de préparation des adsorbants tels que définis précédemment.

Lorsque les adsorbants se présentent sous forme pulvérulente, ils peuvent être obtenus par simple mélange de poudres des zéolites X et LSX.

En général, les poudres de zéolites X et LSX de synthèse présentent un taux d'échange en sodium respectivement de 100 % et 77 %, le reste des sites cationiques étant essentiellement des ions potassium.

Ces poudres peuvent être soumises à un ou plusieurs échanges cationiques éventuels soit séparément (i-e préalablement à leur mélange intime), soit postérieurement à l'étape de mélange.

Ces échanges cationiques consistent à mettre en contact lesdites poudres avec des solutions salines du ou des cations que l'on souhaite insérer partiellement ou totalement dans la ou les structures zéolitiques, au lieu et place des cations échangeables déjà présents.

Des taux d'échange sont en général obtenus, de façon conventionnelle, en procédant par échanges successifs avec la ou lesdites solutions salines de cations.

Lorsque les poudres comportent un mélange de cations, l'échange peut se faire soit par le biais d'une solution mixte comportant des sels de plusieurs cations, soit par échanges successifs de solutions salines unitaires afin d'insérer les cations les uns après les autres.

Lorsque les adsorbants se présentent sous forme d'agglomérés, les étapes du procédé d'obtention sont en général les suivantes :
A - Agglomération et mise en forme du mélange de poudres X et LSX avec un liant,
B - Séchage à basse température (de l'ordre de 80-100 °C) et activation à une température comprise entre 300 et 700°C, de préférence entre 400 et 600 °C, du produit obtenu en A ),
C - Zéolitisation éventuelle du liant si le liant est zéolitisable,
D - Lavage, séchage et activation à une température comprise entre 300 et 700°C, de préférence entre 400 et 600 °C, du produit obtenu en C ) ou du produit obtenu après échange cationique du produit issu de B).

A titre d'exemple de liant inerte, on peut citer la silice, l'alumine, les argiles et à titre de liant zéolitisable, le kaolin, le métakaolin, l'halloysite.

Les constituants de ces agglomérés peuvent subir un ou plusieurs échanges cationiques, suivi(s) d'un lavage à l'eau,
soit avant l'étape A), comme indiqué plus haut pour les mélanges pulvérulents, dans ce cas les agglomérés sont obtenus à l'issue de l'étape B) ou D) selon qu'il y ait ou non zéolitisation liant,
soit après l'étape B),
soit après l'éventuelle étape de zéolitisation du liant zéolitisable sur les produits issus de l'étape C) préalablement séchés et avant l'étape D).

S'il ny a ni échange cationique ni zéolitisation, l'adsorbant selon l'invention est obtenu à l'issue de l'étape B)

Une variante de l'étape A) consiste à mélanger de façon conventionnelle des poudres cristallines de zéolites X et LSX avec de l'eau et un liant (le plus souvent sous forme de poudre) puis à pulvériser ce mélange sur des agglomérés zéolitiques déjà formés jouant le rôle de germes d'agglomération. Pendant cette pulvérisation, les agglomérés peuvent être soumis à une rotation continue sur eux-mêmes selon une technique de type "boule de neige", par exemple dans un réacteur muni d'un axe de rotation. Les agglomérés ainsi obtenus se présentent alors sous forme de billes.

L'étape de zéolitisation (étape C)) consiste à convertir le liant zéolitisable avec lequel on a préalablement aggloméré le mélange de poudres de zéolites LSX et X, par macération alcaline par exemple selon le procédé décrit dans la demande de brevet WO 99/05063, permettant ainsi d'obtenir des agglomérés contenant peu de matière inerte au sens de l'adsorption, typiquement jusqu'à environ 5 % en poids de liant inerte après zéolitisation, ce qui présente un avantage indéniable lors de l'utilisation de tels adsorbants.

L'invention a également pour objet un procédé de décarbonatation de flux gazeux. Le procédé de décarbonatation selon l'invention peut être mis en oeuvre par passage du flux gazeux à décarbonater sur un ou plusieurs lits d'adsorbant associés en parallèle ou susceptibles d'enchaîner de façon cyclique étape d'adsorption et étape de désorption (destinée à la régénération de l'adsorbant) ; au stade industriel, on opère préférentiellement selon un procédé par adsorption par variation de pression (PSA) et avantageusement par adsorption par variation de pression et de température (PTSA). Les procédés de type PSA et PTSA impliquent la mise en oeuvre de cycles de pression. Dans une première phase, le lit d'adsorbant assure la séparation du polluant par adsorption de ce constituant ; dans une seconde phase, l'adsorbant est régénéré par abaissement de la pression. A chaque nouveau cycle, il est essentiel que la désorption du polluant soit la plus complète et la plus efficace possible, de façon à retrouver un état régénéré de l'adsorbant identique ou sensiblement identique à chaque nouveau cycle.

La pression partielle du CO₂ présent dans le flux gazeux n'excède en général pas 25 mbars et est de préférence inférieure à 10 mbars.

De façon à purifier en continu le flux gazeux tel que l'air, on dispose en général en parallèle un certain nombre de lits d'adsorbant que l'on soumet en alternance à un cycle d'adsorption avec compression et de désorption avec décompression. Dans les procédés PSA et PTSA, le cycle de traitement auquel est soumis chaque lit comprend les étapes suivantes :
a/ faire passer le flux gazeux pollué dans une zone d'adsorption comprenant le lit d'adsorbant, le lit d'adsorbant assurant la séparation du ou des polluants (ici CO₂) par adsorption
b/ désorber le CO₂ adsorbé par instauration d'un gradient de pression et abaissement progressif de la pression dans ladite zone d'adsorption pour récupérer le CO₂ par l'entrée dans la zone d'adsorption;
c/ remonter en pression ladite zone d'adsorption par introduction d'un courant gazeux pur par la sortie de la zone d'adsorption.

Ainsi, chaque lit est soumis à un cycle de traitement comprenant une phase de production de gaz pur, une seconde phase de décompression et une troisième phase de recompression.

Si le seul polluant à éliminer du flux gazeux est CO₂, un seul lit d'adsorbant, constitué essentiellement par des agglomérés tels que définis plus haut est placé dans la zone d'adsorption.

S'il y a plusieurs polluants à éliminer, la zone d'adsorption peut alors comprendre plusieurs lits d'adsorbant susceptibles d'adsorber les impuretés ou polluants non désirés. Ainsi, pour éliminer le dioxyde de carbone et l'eau contenus dans l'air, on associera un agent dessicant pour adsorber l'eau tel que l'alumine ou un gel de silice et l'adsorbant zéolitique de la présente invention.

Des modes de réalisation particuliers appliqués à la purification d'air pollué par CO₂ et H₂O font l'objet des revendications 14 et 15.

De façon à optimiser les procédés PSA et PTSA, les phases de décompression et de compression des différents lits d'adsorbant sont synchronisées : il s'avère particulièrement avantageux d'introduire des étapes d'égalisation des pressions entre deux lits d'adsorbant, l'un étant en phase de décompression, l'autre en phase de recompression.

Lors de la mise en oeuvre du procédé selon l'invention, les pressions d'adsorption sont en général comprises entre 0,2 et 20 bars et de préférence entre 1 et 10 bars tandis que les pressions de désorption sont en général comprises entre 0,02 et 5 bars et de préférence entre 0,1 et 2 bars.

Comme pour les procédés de décarbonatation de l'état de la technique, les températures dans la zone d'adsorption sont en général comprises entre 20 et 80 °C, et avantageusement entre 30 et 60 °C ; dans les procédés de décarbonatation de l'état de la technique, les températures de régénération qui sont nécessaires, pour obtenir une régénération suffisante de l'adsorbant sont typiquement de l'ordre de 130 à 170 °C, ce qui nécessite un chauffage de l'adsorbant et augmente le coût de l'installation industrielle.

Par rapport à l'état de la technique, la présente invention offre un avantage supplémentaire substantiel au niveau de la régénération des adsorbants zéolitiques agglomérés avec un liant zéolitisé selon l'invention dans la mesure où pour obtenir la même performance de l'adsorbant après sa régénération, les températures de régénération à mettre en oeuvre sont comprises entre 100 et 120°C et sont donc bien inférieures à celles pratiquées jusqu'alors.

### Exemple 1 : préparation d'un adsorbant par mélange de poudres de LSX et de 13 X puis agglomération et échange Na

La première étape consiste à préparer le mélange constitué
de 65 % en poids de poudre anhydre de zéolite X (Si/Al = 1,25 ; taux d'échange en sodium voisin de 100 %) dont la capacité d'adsorption en toluène à une pression relative de 0,5 et à 25°C est comprise entre 23,5 et 24,5 %.
et de 35 % en poids de poudre anhydre de zéolite LSX (rapport Si/Al = 1 ; taux d'échange en sodium 77 %) dont la capacité d'adsorption en toluène à une pression relative de 0,5 et à 25°C est comprise entre 22 et 23 %.

Ce mélange est ensuite aggloméré et mis en forme de billes par addition de 15 parties en poids d'une argile pour 85 parties en poids du mélange de zéolites. Les agglomérats sont ensuite séchés à une température de l'ordre de 80-100 °C et activés à 500-600°C. Ceux-ci sont ensuite mis plusieurs fois en contact avec une solution de chlorure de sodium 2 M à 80 ° C pendant 4 h pour augmenter le taux d'échange en sodium. A chaque étape, le rapport volume de solution sur masse de solide est de 7ml/g. Entre chaque échange, le solide est lavé plusieurs fois de manière à le débarrasser des excédents de sels.

Après un seul échange, le taux d'échange global en sodium (mesuré par fluorescence X ou par attaque chimique conventionnelle selon une technique d'ionisation par plasma (ICP mis pour inductibly coupled plasma) est égal à 94 % et après 4 échanges, il atteint 99 %. Les agglomérés ainsi échangés sont ensuite séchés à basse température et activés à 500-600°C. Le rapport global Si/Al de la matière zéolitique de ces adsorbants est égal à 1,17.

On mesure leur capacité d'adsorption en CO₂ exprimée en cm³/g à 25°C sous diverses pressions de CO₂ ainsi que leur capacité d'adsorption en toluène à 25°C sous une pression partielle de 0,5 qui est de 20-21 %.

A titre comparatif, on mesure la capacité d'adsorption de billes de zéolite X agglomérée avec 15 % du même liant ainsi que la capacité d'adsorption de billes de zéolite NaLSX (taux d'échange en sodium 94 %) agglomérées de façon identique. Les résultats sont réunis dans le tableau 1.

La teneur en eau des agglomérés mesurée par coulométrie est comprise entre 0,1 et 0,3 % du poids total des agglomérés.

Dans le tableau 1, sont également indiqués le taux d'échange théorique en sodium d'un mélange de 65 % de zéolite Na X (taux d'échange en sodium voisin de 100 %) et de 35 % de zéolite LSX (taux d'échange en sodium égal à 94 %) ainsi que sa capacité d'adsorption théorique que l'on calcule selon la loi des mélanges.

**Tableau 1**

| Type de billes | Taux d'échange en Na (%) | Pression (mbars) | | |
|---|---|---|---|---|
| | | 2 | 5 | 10 |
| | | | | |
| | | adsorption en CO₂ | | |
| Billes de NaX | 100 | 14 | 25,1 | 34,5 |
| Billes de NaLSX | 94 | 29,3 | 49,3 | 65,2 |
| Calcul théorique à partir des lignes 1 et 2 du tableau | 98 | 19,3 | 33,6 | 45,2 |
| Billes selon l'invention (NaX +NaLSX) | 94 | 24 | 35,4 | 45,4 |
| Billes selon l'invention (NaX +NaLSX) | 99 | 31,5 | 40,2 | 48,9 |

On constate que les agglomérés selon l'invention adsorbent à très faible pression (2-5 mbars) au moins 24% en plus de CO₂ comparativement au mélange théorique de billes de X et de LSX.

### Exemple 2 : préparation d'un adsorbant par mélange de poudres de LSX et de 13 X puis échange Na et agglomération

Le mélange de poudres de zéolite X et LSX de l'exemple 1 est mis plusieurs fois en contact avec une solution de chlorure de sodium 2 M à 80 °C pendant 4 h pour augmenter le taux d'échange en sodium. A chaque étape, le rapport volume de solution sur masse de solide est de 7 ml/g. Entre chaque échange, la poudre est avée plusieurs fois de manière à la débarrasser des excédents de sels.

Après 4 échanges, le taux d'échange global en sodium du mélange de poudre est égal à 99 %. Ce mélange est ensuite aggloméré sous forme de billes par addition de 15 parties en poids d'argile pour 85 parties en poids de mélange de poudre de zéolite puis séché à 80-100 °C et activé à 500-600 °C. Le taux d'échange global en sodium de ces agglomérés est égal à 99 %. Le rapport global Si/Al de la matière zéolitique de ces adsorbants est égal à 1,17 et leur teneur en eau est comprise dans le même intervalle que celui des agglomérés de l'exemple 1.

La capacité d'adsorption en CO₂ mesurée dans les mêmes conditions que décrites à l'exemple est identique à celle de l'adsorbant de l'exemple 1 dont le taux d'échange global en sodium de la matière zéolitique est égal à 99 %.

### Exemple 3 : préparation d'un adsorbant par échange Na sur une poudre de LSX puis mélange avec une poudre de 13 X de taux d'échange en Na voisin de 100 % puis agglomération

La première étape consiste à mettre en contact de la poudre de zéolite LSX (Si/Al = 1 ; taux d'échange en sodium 77 %) avec une solution de chlorure de sodium 2 M à 80 °C pendant 4 h pour augmenter le taux d'échange en sodium. A chaque étape, le rapport volume de solution sur masse de solide est de 7 ml/g. Entre chaque échange, le solide est lavé plusieurs fois de manière à le débarrasser des excédents de sels.

Après 4 échanges, le taux d'échange global en sodium du mélange de poudre est égal à 99 %.

La seconde étape consiste à mélanger 35% en poids de poudre de zéolithe NaLSX échangée à l'étape 1 avec 65% de poudre de zéolite X (Si/Al = 1,25 ; taux d'échange en sodium voisin de 100 %) puis à agglomérer sous forme de billes 85 parties en poids de ce mélange pulvérulent avec 15 parties en poids d'une argile. Les agglomérés sont ensuite séchés à 80-100 °C, calcinés à 500-600°C. Leur teneur en eau est comprise dans le même intervalle que celui des agglomérés de l'exemple 1.

La capacité d'adsorption en CO₂ de l'adsorbant mesurée dans les mêmes conditions que celles décrites à l'exemple 1 est identique à celle de l'adsorbant de l'exemple 1 dont le taux d'échange global en sodium est également voisin de 99 %.

### Exemple 4 : préparation d'un adsorbant par mélange de billes de zéolites X et LSX agglomérées puis échange Na sur mélange de billes

L'adsorbant est ici obtenu par mélange
de 65% en poids de billes de X (Si/Al = 1,25 ; taux d'échange en Na voisin de 100 %) agglomérées avec 15 parties en poids d'argile pour 85 parties en poids de zéolite X
et de 35% en poids de billes de zéolite LSX (Si/Al = 1 ; taux d'échange en Na voisin de 77 %) agglomérées avec 15 parties en poids d'argile pour 85 parties en poids de zéolite LSX.

Le mélange de billes est séché à 80-100 °C puis activé à 500-600 °C avant d'être mis en contact avec une solution de chlorure de sodium 2 M à 80 °C pendant 4 h pour augmenter le taux d'échange en sodium. A chaque étape, le rapport volume de solution sur masse de solide est de 7 ml/g. Entre chaque échange, les billes sont lavées plusieurs fois de manière à les débarrasser des excédents de sels. Après 4 échanges, le taux d'échange global en sodium des billes est égal à 99 %. Les billes sont ensuite séchées à 80-100 °C puis activées à 500-600 °C. Leur teneur en eau est comprise dans le même intervalle que celui des billes de l'exemple 1. On mesure leur capacité d'adsorption en CO₂ (exprimée en cm³/g à 25°C) sous diverses pressions de CO₂ ; les résultats sont réunis dans le tableau 2.

**Tableau 2**

| Taux d'échange en Na 99 % | Pression | | |
|---|---|---|---|
| | 2 mbars | 5 mbars | 10 mbars |
| Adsorption CO₂ | 21,6 | 33 | 41 |

### Exemple 5 préparation d'un adsorbant par échange Na sur billes de zéolite LSX agglomérées puis mélange avec billes de zéolite X agglomérées

L'adsorbant est obtenu par mélange pondéral
de 65% de billes de zéolite X ( Si/Al = 1,25 ) agglomérée avec 15 parties en poids d'argile pour 85 parties en poids de zéolite X
et de 35% de billes de NaLSX (Si/Al = 1 ; taux d'échange en Na voisin de 99 %)

Le mélange est séché à 80-100 ° C puis activé à 500-600°C. Leur teneur en eau est comprise dans le même intervalle que celui des billes de l'exemple 1.

La capacité d'adsorption en CO₂ de ces billes est identique à celle des billes de l'exemple 4 (cf tableau 2)

### Exemple 6 : préparation d'un adsorbant par mélange de poudres de LSX et de 13 X puis agglomération avec un liant zéolitisable, zéolitisation du liant et échange Na

On agglomère ici 85 parties en poids du mélange de poudres issu de l'étape 1 de l'exemple 1 avec 15 parties en poids d'argile kaolinique zéolitisable sous forme de billes. Les agglomérés sont ensuite séchés à 80-100 °C puis calcinés à 500-600°C puis immergés dans une solution aqueuse de soude de concentration 220g/l pendant 3 h puis lavés à l'eau suivant la procédure décrite dans WO 99/05063.

Leur capacité d'adsorption en toluène mesurée à 25°C sous une pression partielle de 0,5 est de 22,5-23 % ce qui correspond à un taux de liant qui n'excède pas 5% du poids total des agglomérés. Les billes sont ensuite séchées et mises en contact avec une solution de chlorure de sodium 2 M à 80 °C pendant 4 h pour augmenter le taux d'échange en sodium. A chaque étape, le rapport volume de solution sur masse de solide est de 7 ml/g. Entre chaque échange, les billes sont lavées plusieurs fois de manière à les débarrasser des excédents de sels. Après 4 échanges, le taux d'échange global en sodium des billes est égal à 99 %. Les billes sont ensuite séchées à 80-100 °C puis activées à 500-600 °C. Leur teneur en eau est comprise dans le même intervalle que celui des billes de l'exemple 1.

Le tableau 3 présente les résultats obtenus en capacité d'adsorption de CO₂ exprimés en cm³/g à 25°C sous diverses pressions de CO₂ sur ces billes.

**Tableau 3**

| Taux d'échange en Na 99 % | Pression (mbars) | | |
|---|---|---|---|
| | 2 | 5 | 10 |
| Adsorption CO₂ | 32,3 | 43,8 | 53,8 |

### Exemple 7 : préparation d'un adsorbant par mélange de billes de zéolite LSX agglomérée avec un liant zéolitisé et de billes de zéolite X agglomérée avec un liant zéolitisé puis échange Na sur le mélange de billes

La première étape consiste à mélanger 65 parties en poids de billes anhydres de zéolite X (Si/Al = 1,25 ; taux d'échange voisin de 100 %) et 35 parties en poids de billes anhydres de zéolite LSX (Si/Al = 1 ; taux d'échange en Na voisin de 77 %). Ces billes de zéolites X et LSX comportant chacune 5 % de liant ont été obtenues selon le procédé décrit dans la demande WO99/05063. Le mélange de billes à 5% de liant est séché à 80-100 °C puis calciné à 500-600°C. Le mélange est mis en contact avec une solution de chlorure de sodium 2 M à 80 °C pendant 4 h pour augmenter le taux d'échange en sodium de la matière zéolitique. A chaque étape, le rapport volume de solution sur masse de solide est de 7 ml/g. Entre chaque échange, les billes sont lavées plusieurs fois de manière à les débarrasser des excédents de sels. Après 4 échanges, le taux d'échange global en sodium des billes est égal à 99 %. Les billes sont ensuite activées à 500-600 °C.

La capacité d'adsorption en CO₂ et la teneur en eau de ces billes sont identiques à celles des billes de l'exemple 6 (cf tableau 3).

### Exemple 8 : préparation d'un adsorbant par mélange de billes de zéolite LSX agglomérée avec un liant zéolitisable et de billes de zéolite X agglomérée avec un liant zéolitisable puis zéolitisation du liant et échange Na sur mélange de billes (variante de l'exemple 7)

L'adsorbant est préparé en mélangeant dans un premier temps
35% en poids de billes de zéolite LSX (Si/Al = 1 ; taux d'échange en Na voisin de 77 %) comportant 15 parties en poids d'un liant kaolinique zéolitisable pour 85 parties en poids de zéolite LSX
avec 65% de billes de X (Si/Al = 1,25 ; taux d'échange voisin de 100 %) comportant 15 parties en poids d'un liant kaolinique zéolitisable pour 85 parties en poids de zéolite X.

Après séchage à basse température (80-100°C) puis activation à 500-600 °C , le mélange est immergé dans une solution aqueuse de soude (concentration 220 g/l) pendant 3 h suivant la procédure décrite dans la demande WO99/05063. La capacité d'adsorption de toluène est alors mesurée sur ce mélange pour en évaluer la teneur résiduel en liant qui est voisine de 5% du poids total des billes. Ces dernières sont alors séchées à 80-100°C, activées à 500-600°C puis mises en contact avec une solution de chlorure de sodium 2 M à 80°C pendant 4 h pour augmenter le taux d'échange en sodium de la matière zéolitique. A chaque étape, le rapport volume de solution sur masse de solide est de 7 ml/g. Entre chaque échange, les billes sont lavées plusieurs fois de manière à les débarrasser des excédents de sels. Après 4 échanges, le taux d'échange global en sodium des billes est égal à 99 %. Les billes sont ensuite séchées à 80-100°C et activées à 500-600°C.

La capacité d'adsorption en CO₂ et la teneur en eau de ces billes sont identiques à celles des billes de l'exemple 6 (cf. tableau 3)

### Exemple 9 : préparation d'un adsorbant par mélange de billes de zéolite LSX agglomérée avec un liant zéolitisé puis échangées Na et de billes de zéolite X agglomérée avec un liant zéolitisé

Dans une première étape, on prépare des billes de NaLSX à 5% de liant en agglomérant 85 parties en poids d'une poudre de zéolite LSX (Si/Al = 1; taux d'échange en Na voisin de 77 %) avec 15 parties en poids d'un mélange constitué d'une argile de type montmorillonite (15% en poids), d'une argile de type kaolin (85%), d'un peu de carboxyméthylcellulose et d'eau. Les agglomérés sont séchés à 80-100°C et calcinés à 500°C pendant deux heures sous atmosphère inerte exempte d'eau. On immerge ensuite ces agglomérés dans une solution de soude selon l'enseignement de la demande WO99/05063. Puis on les rince plusieurs fois dans l'eau. Les mesures de capacité de toluène montrent que le taux de liant résiduel est voisin de 5 %.

Les agglomérés sont ensuite mis en contact avec une solution de chlorure de sodium 2 M à 80 °C pendant 4 h pour augmenter le taux d'échange en sodium de la matière zéolitique. A chaque étape, le rapport volume de solution sur masse de solide est de 7 ml/g. Entre chaque échange, les billes sont lavées plusieurs fois de manière à les débarrasser des excédents de sels. Après 4 échanges, le taux d'échange global en sodium des billes est égal à 99 %. Les billes sont ensuite activées à 500-600°C.

Dans une deuxième étape, on mélange 35% en poids de billes NaLSX obtenues à l'issue de la 1^{ère} étape avec 65% de billes de zéolite X agglomérée avec un liant qui a été zéolitisé selon le procédé décrit à l'exemple 6 de manière à ce que la teneur en matière inerte soit voisine de 5 % du poids des billes.

Le taux d'échange global en sodium de la matière zéolitique de ces billes est supérieur à 99%. Elles sont alors séchées à 80-100°C et calcinées à 500-600°C. Les capacités d'adsorption de CO₂ mesurées à 25°C sous diverses pressions de CO₂ sur ces billes et leur teneur en eau sont identiques à celles de l'exemple 6 (cf. tableau 3)

## Revendications

1. Adsorbant zéolitique comprenant un mélange de 5 % à 95 %, et de préférence de 50 à 90 %, en poids d'au moins une zéolite X de rapport Si/Al égal à 1,25 et de 95 à 5 %, et de préférence de 50 à 10 %, en poids d'au moins une zéolite LSX de Si/Al = 1 et dont
• soit au moins 80 % de la somme des sites cationiques échangeables de la totalité des zéolites du mélange est occupé par des cations sodium,
• soit au moins 70 % de la somme des sites cationiques échangeables de la totalité des zéolites du mélange est occupé par des cations strontium,
le reste des sites échangeables pouvant être occupé par des cations choisis parmi les groupes IA, IIA, IIIA du tableau périodique, les ions trivalents de la série des terres-rares ou lanthanides.

2. Adsorbant zéolitique selon la revendication 1 sous forme de poudre de zéolites X et LSX.

3. Adsorbant zéolitique selon la revendication 1 aggloméré avec un liant inerte et **caractérisé en ce que** le taux de liant inerte de l'adsorbant zéolitique est inférieur ou égal à 25 parties en poids, de préférence inférieur ou égal à 20 parties en poids, et avantageusement tout au plus égal 5 parties en poids, pour 100 parties en poids du mélange de zéolites et de liant.

4. Adsorbant zéolitique selon l'une quelconque des revendications 1 à 3 dont la teneur en eau représente au plus 1% du poids total de l'adsorbant, de préférence au plus 0,5 % et avantageusement au plus 0,3 %.

5. Procédé d'obtention d'un adsorbant sous forme de poudre tel que défini à la revendication 2 ou à la revendication 4 par mélange de poudres des zéolites X et LSX et par un ou plusieurs éventuels échanges cationiques soit sur poudres X et/ou LSX préalablement à leur mélange, soit postérieurement à leur mélange.

6. Procédé d'obtention d'un adsorbant aggloméré tel que défini à la revendication 3 ou à la revendication 4 comprenant les étapes suivantes :
A - Agglomération et mise en forme du mélange de poudres X et LSX avec un liant,
B - Séchage à basse température et activation du produit obtenu en A) à une température comprise entre 300 - 700°C, de préférence entre 400 et 600 °C,
C - Zéolitisation éventuelle du liant si le liant est zéolitisable,
D - Lavage, séchage et activation à une température comprise entre 300-700°C, de préférence entre 400 et 600 °C du produit obtenu en C) ou du produit obtenu après échange cationique du produit issu de B),
et éventuellement un ou plusieurs échanges cationiques, suivis d'un lavage à l'eau :
• préalablement à l'étape A), soit sur les poudres X et LSX prélablement à leur mélange, soit juste après leur mélange, (dans ce cas, l'adsorbant aggloméré est obtenu à l'issue de l'étape B) ou D) suivant la zéolitisation ou non du liant),
• et/ou après l'étape B),
• et/ou après l'éventuelle étape de zéolitisation du liant zéolitisable sur les produits issus de l'étape C) préalablement séchés et avant l'étape D),
étant entendu que s'il n'y a ni échange cationique ni zéolitisation, l'adsorbant aggloméré est obtenu à l'issue de l'étape B)

7. Procédé de décarbonatation de flux gazeux, de préférence d'air, pollué par CO₂, **caractérisé en ce qu'**on met en contact, dans une zone d'adsorption, le flux gazeux à purifier avec au moins un adsorbant zéolitique tel que défini dans l'une quelconque des revendications 1 à 4, de préférence aggloméré avec un liant.

8. Procédé de décarbonatation de flux gazeux selon la revendication 7 avec un adsorbant zéolitique dont le taux d'échange global en sodium est supérieur à 90 % et avantageusement supérieur à 98 %.

9. Procédé de décarbonatation de flux gazeux selon la revendication 7 avec un adsorbant zéolitique dont le taux d'échange global en strontium est supérieur à 70 % et dont la majorité des sites cationiques restants est occupée par des ions sodium.

10. Procédé de décarbonatation de flux gazeux selon la revendication 7 à 9, **caractérisé en ce qu'**on opère par adsorption modulée en pression (PSA) et de préférence par adsorption modulée en pression et en température (PTSA)

11. Procédé selon l'une quelconque des revendications 7 à 10, dans lequel les pressions en adsorption sont comprises entre 1 et 10 bars et les pressions de désorption entre 0,1 et 2 bars.

12. Procédé selon l'une quelconque des revendications 7 à 11, **caractérisé en ce qu'**il comprend la mise en oeuvre d'un cycle de traitement comprenant les étapes :
a/ faire passer le flux gazeux pollué dans une zone d'adsorption comprenant le lit d'adsorbant, le lit d'adsorbant assurant la séparation du ou des polluants par adsorption
b/ désorber le CO₂ adsorbé par instauration d'un gradient de pression et abaissement progressif de la pression dans ladite zone d'adsorption pour récupérer le CO₂ par l'entrée dans la zone d'adsorption;
c/ remonter en pression ladite zone d'adsorption par introduction d'un courant gazeux pur par la sortie de la zone d'adsorption.

13. Procédé selon la revendication 12 dans lequel l'adsorbant zéolitique est aggloméré avec un liant zéolitisé, dans lequel l'adsorbant est régénéré (étape b/ à une température comprise entre 100 et 120 °C.

14. Procédé de purification d'air pollué par CO₂ et H₂O **caractérisé en ce qu'**on met en contact dans une zone d'adsorption le flux gazeux à purifier avec au moins un agent dessicant, de préférence à base d'alumine, et au moins avec un adsorbant
* essentiellement constitué d'un mélange de zéolites X et LSX, dont le taux d'échange global en sodium est égal ou supérieur à 98%,
* aggloméré avec un liant et dont le taux de liant résiduel inerte de l'adsorbant est inférieur ou égal à 25, de préférence 20 et avantageusement 5, parties en poids pour 100 parties en poids de mélange de zéolites et de liant,
* et dont la teneur en eau de l'adsorbant représente avantageusement au plus 1%, et de préférence au plus 0,5 %, du poids total de l'adsorbant.

15. Procédé selon la revendication 14 **caractérisé en ce qu'**il comprend la mise en oeuvre d'un cycle de traitement comprenant les étapes :
a/ faire passer le flux gazeux pollué dans une zone d'adsorption comprenant un lit d'agent dessicant et un lit d'adsorbant tel que défini à la revendication 14,
b/ désorber le CO₂ et adsorbé par instauration d'un gradient de pression et abaissement progressif de la pression dans ladite zone d'adsorption pour récupérer le CO₂ par l'entrée dans la zone d'adsorption;
c/ remonter en pression ladite zone d'adsorption par introduction d'un courant gazeux pur par la sortie de la zone d'adsorption.

## Patentansprüche

1. Zeolithisches Adsorbens, das ein Gemisch von 5 bis 95 Gew.-% und vorzugsweise 50 bis 90 Gew.-% mindestens eines Zeolithen X mit einem Si/Al-Verhältnis von 1,25 und 95 bis 5 Gew.-% und vorzugsweise 50 bis 10 Gew.-% mindestens eines Zeolithen LSX mit Si/Al = 1 enthält, wobei
• entweder mindestens 80% der Summe der austauschbaren kationischen Plätze der gesamten Zeolithen des Gemisches von Natriumkationen besetzt sind,
• oder mindestens 70% der Summe der austauschbaren kationischen Plätze der gesamten Zeolithen des Gemisches von Strontiumkationen besetzt sind,
wobei die restlichen austauschbaren Plätze von Kationen besetzt sein können, die unter den Gruppen IA, IIA, IIIA des Periodensystems und den dreiwertigen Ionen der Gruppe der Seltenerdmetalle oder Lanthanoiden ausgewählt werden können.

2. Zeolithisches Adsorbens nach Anspruch 1 in Form eines Pulvers aus Zeolith X und Reolith LSX.

3. Zeolithisches Adsorbens nach Anspruch 1, das mit einem inerten Bindemittel agglomeriert ist, **dadurch gekennzeichnet, dass** der Gehalt des inerten Bindemittels des zeolithischen Adsorbens bei 25 Gewichtsteilen oder darunter und vorzugsweise bei 20 Gewichtsteilen oder darunter liegt und vorteilhaft höchstens 5 Gewichtsteile auf 100 Gewichtsteile des Gemisches aus Zeolithen und Bindemittel beträgt.

4. Zeolithisches Adsorbens nach einem der Ansprüche 1 bis 3, dessen Wassergehalt höchstens 1% des Gesamtgewichts des Adsorbens, vorzugsweise höchstens 0,5% und vorteilhaft höchstens 0,3% ausmacht.

5. Verfahren zur Herstellung eines Adsorbens in Pulverform nach Anspruch 2 oder nach Anspruch 4 durch Mischen von Pulvern der Zeolithen X und LSX und durch einen oder mehrere, gegebenenfalls durchgeführte Kationenaustauschvorgänge an Pulver X und/oder Pulver LSX entweder vor ihrem Mischen oder nach ihrem Mischen.

6. Verfahren zur Herstellung eines agglomerierten Adsorbens nach Anspruch 3 oder nach Anspruch 4 mit den folgenden Schritten:
A - Agglomerieren und Formgebung des Gemisches der Pulver X und LSX mit einem Bindemittel,
B - Trocknen des in A) erhaltenen Produkts bei niedriger Temperatur und Aktivieren bei einer Temperatur von 300 bis 700° C und vorzugsweise 400 bis 600° C,
C - gegebenenfalls Überführen des Bindemittels in einen Zeolithen, falls das Bindemittel zeolithisierbar ist,
D -Waschen, Trocknen und Aktivieren bei einer Temperatur im Bereich von 300 bis 700 °C und vorzugsweise 400 bis 600° C des in C) erhaltenen Produkts oder des Produkts, das nach Kationenaustausch des Produkts aus Schritt B) erhalten wird, und gegebenenfalls einen oder mehrere Kationenaustauschvorgänge und anschließendes Waschen mit Wasser:
• vor Schritt A) entweder an den Pulvern X und LSX vor ihrem Mischen oder unmittelbar nach ihrem Mischen (in diesem Fall wird das agglomerierte Adsorbens nach Schritt B) oder D) erhalten, wobei das Bindemittel in der Folge gegebenenfalls zeolithisiert wird),
• und/oder nach Schritt B),
• nach dem gegebenenfalls durchgeführten Schritt der Zeolithisierung des zeolithisierbaren Bindemittels an den Produkten aus Schritt C), die vorab getrocknet wurden, und vor Schritt D),
mit der Maßgabe, dass das agglomerierte Adsorbens nach Schritt B) erhalten wird, wenn weder ein Kationenaustausch noch eine Zeolithisierung stattfindet.

7. Verfahren zum Entfernen von Kohlendioxid aus Gasströmen und vorzugsweise Luft, die mit CO₂ verunreinigt ist, **dadurch gekennzeichnet, dass** in einer Adsorptionszone der zu reinigende Gasstrom mit mindestens einem zeolithischen Adsorbens nach einem der Ansprüche 1 bis 4, das vorzugsweise mit einem Bindemittel agglomeriert ist, in Kontakt gebracht wird.

8. Verfahren zum Entfernen von Kohlendioxid aus einem Gasstrom nach Anspruch 7 mit einem zeolithischen Adsorbens, dessen Natriumaustauschgrad insgesamt über 90% und vorzugsweise über 98% liegt.

9. Verfahren zum Entfernen von Kohlendioxid aus Gasströmen nach Anspruch 7 mit einem zeolithischen Adsorbens, dessen Strontiumaustauschgrad insgesamt über 70% liegt und dessen restliche kationische Plätze hauptsächlich von Natriumionen besetzt sind.

10. Verfahren zum Entfernen von Kohlendioxid aus Gasströmen nach Anspruch 7 bis 9, **dadurch gekennzeichnet, dass** eine Druckwechseladsorption (PSA) und vorzugsweise eine Druckund Temperaturwechseladsorption (PTSA) durchgeführt wird.

11. Verfahren nach einem der Ansprüche 7 bis 10, wobei die Drücke bei der Adsorption im Bereich von 1 bis 10 bar und die Drücke bei der Desorption im Bereich von 0,1 bis 2 bar liegen.

12. Verfahren nach einem der Ansprüche 7 bis 11, **dadurch gekennzeichnet, dass** es einen Behandlungszyklus mit den folgenden Schritten umfasst:
a/ Hindurchleiten des verunreinigten Gasstroms durch eine Adsorptionszone, die ein Adsorbensbett umfasst, wobei das Adsorbensbett die Abtrennung der Verunreinigung(en) durch Adsorption sicherstellt,
b/ Desorption des adsorbierten CO₂ durch Einstellen eines Druckgradienten und allmähliches Absenken des Drucks in der Adsorptionszone, um das CO₂ am Einlass der Adsorptionszone zurückzugewinnen,
c/ Druckerhöhung in der Adsorptionszone durch Einleiten eines reinen Gasstroms über den Auslass der Adsorptionszone.

13. Verfahren nach Anspruch 12, wobei das zeolithische Adsorbens mit einem zeolithisierbaren Bindemittel agglomeriert wurde und wobei nach dem Verfahren das Adsorbens bei einer Temperatur im Bereich von 100 bis 120° C regeneriert wird (Schritt b/).

14. Verfahren zur Reinigung von mit CO₂ und H₂O verunreinigter Luft, **dadurch gekennzeichnet, dass** der zu reinigende Gasstrom in einer Adsorptionszone mit mindestens einem Trockenmittel, vorzugsweise auf der Basis von Aluminiumoxid, und mit mindestens einem Adsorbens in Kontakt gebracht wird, das
* im Wesentlichen aus einem Gemisch der Zeolithen X und LSX besteht, deren Natriumaustauschgrad insgesamt mindestens 98% beträgt,
* mit einem Bindemittel agglomeriert ist und dessen Gehalt an restlichem inerten Bindemittel bei 25 Gewichtsteilen oder darunter und vorzugsweise 20 und vorteilhaft 5 Gewichtsteilen oder darunter auf 100 Gewichtsteile des Gemisches der Zeolithen und des Bindemittels liegt,
* und dessen Wassergehalt vorteilhaft höchstens 1% und vorzugsweise höchstens 0,5% des Gesamtgewichts des Adsorbens ausmacht.

15. Verfahren nach Anspruch 14, **dadurch gekennzeichnet, dass** ein Behandlungszyklus mit den folgenden Schritten durchgeführt wird:
a/ Hindurchleiten des verunreinigten Gasstroms durch eine Adsorptionszone, die ein Trockenmittelbett und ein Adsorbensbett nach Anspruch 14 umfasst,
b/ Desorption des adsorbierten CO₂ durch Einstellen eines Druckgradienten und allmähliches Absenken des Drucks in der Adsorptionszone, um das CO₂ am Einlass der Adsorptionszone rückzugewinnen, und
c/ Druckerhöhung in der Adsorptionszone durch Einleiten eines reinen Gasstroms über den Auslass der Adsorptionszone.

## Claims

1. Zeolite adsorbent comprising a mixture of 5% to 95% and preferably of 50 to 90% by weight of at least one zeolite X with an Si/Al ratio equal to 1.25 and of 95 to 5% and preferably of 50 to 10% by weight of at least one zeolite LSX with Si/Al = 1 for which
• either at least 80% of the sum of the exchangeable cationic sites of all of the zeolites of the mixture are occupied by sodium cations,
• or at least 70% of the sum of the exchangeable cationic sites of all of the zeolites of the mixture are occupied by strontium cations,
it being possible for the remainder of the exchangeable sites to be occupied by cations chosen from Groups IA, IIA and IIIA of the Periodic Table or trivalent ions from the rare earth or lanthanide series.

2. Zeolite adsorbent according to Claim 1, in the form of a powder of zeolite X and zeolite LSX.

3. Zeolite adsorbent according to Claim 1 agglomerated with an inert binder and **characterized in that** the level of inert binder in the zeolite adsorbent is less than or equal to 25 parts by weight, preferably less than or equal to 20 parts by weight and advantageously at the very most equal to 5 parts by weight per 100 parts by weight of the mixture of zeolites and of binder.

4. Zeolite adsorbent according to any one of Claims 1 to 3, the water content of which represents at most 1%, preferably at most 0.5% and advantageously at most 0.3% of the total weight of the adsorbent.

5. Process for producing an adsorbent in the form of a powder as defined in Claim 2 or in Claim 4 by mixing zeolite X and zeolite LSX powders and by one or more optional cationic exchanges, either on X powder and/or LSX powder prior to the mixing thereof or subsequent to the mixing thereof.

6. Process for producing an agglomerated adsorbent as defined in Claim 3 or in Claim 4, comprising the following stages:
A - Agglomerating and shaping the mixture of X and LSX powders with a binder,
B - Drying at low temperature and activating, at a temperature of between 300 and 700°C, preferably between 400 and 600°C, the product obtained in A),
C - Optional zeolitization of the binder, if the binder can be converted to a zeolite,
D - Washing, drying and activating, at a temperature of between 300 and 700°C, preferably between 400 and 600°C, the product obtained in C) or the product obtained after cationic exchange of the product resulting from B),
and optionally one or more cationic exchanges, followed by washing with water:
• prior to stage A), either on X powder and LSX powder prior to the mixing thereof or immediately after the mixing thereof (in this case, the agglomerated adsorbent is obtained on conclusion of stage B) or D), following the zeolitization or non-zeolitization of the binder),
• and/or after stage B),
• and/or after the optional stage of zeolitization of the binder which can be converted to a zeolite on predried products resulting from stage C) and before stage D),
it being understood that, if neither cationic exchange nor zeolitization has been carried out, the agglomerated adsorbent is obtained on conclusion of stage B).

7. Process for the decarbonatation of a gas flow, preferably air, contaminated by CO₂, **characterized in that** the gas flow to be purified is brought into contact, in an adsorption region, with at least one zeolite adsorbent as defined in any one of Claims 1 to 4, preferably agglomerated with a binder.

8. Process for the decarbonatation of a gas flow according to Claim 7 with a zeolite adsorbent, the overall degree of exchange with sodium of which is greater than 90% and advantageously greater than 98%.

9. Process for the decarbonatation of a gas flow according to Claim 7 with a zeolite adsorbent, the overall degree of exchange with strontium of which is greater than 70% and the majority of the remaining cationic sites of which are occupied by sodium ions.

10. Process for the decarbonatation of a gas flow according to Claims 7 to 9, **characterized in that** the operation is carried out by pressure swing adsorption (PSA) and preferably by pressure and temperature swing. adsorption (PTSA).

11. Process according to any one of Claims 7 to 10, in which the adsorption pressures are between 1 and 10 bar and the desorption pressures are between 0.1 and 2 bar.

12. Process according to any one of Claims 7 to 11, **characterized in that** it comprises the use of a treatment cycle comprising the stages:
a) passing the contaminated gas flow into an adsorption region comprising the adsorbent bed, the adsorbent bed providing for the separation of the contaminant or contaminants by adsorption,
b) desorbing the adsorbed CO₂ by establishing a pressure gradient and gradually reducing the pressure in the said adsorption region in order to recover the CO₂ via the inlet into the adsorption region,
c) increasing the pressure in the said adsorption region by introducing a pure gas stream via the outlet of the adsorption region.

13. Process according to Claim 12, in which the zeolite adsorbent is agglomerated with a zeolitized binder, in which the adsorbent is regenerated (stage b) at a temperature of between 100 and 120°C.

14. Process for purifying air contaminated by CO₂ and H₂O, **characterized in that** the gas flow to be purified is brought into contact, in an adsorption region, with at least one drying agent, preferably based on alumina, and at least with one adsorbent
* composed essentially of a mixture of zeolite X and zeolite LSX, the overall degree of exchange with sodium of which is equal to or greater than 98%,
* agglomerated with a binder, and of which the level of residual inert binder in the adsorbent is less than or equal to 25, preferably 20 and advantageously 5 parts by weight per 100 parts by weight of mixture of zeolites and of binder,
* and the water content of which in the adsorbent advantageously represents at most 1%, and preferably at most 0.5%, of the total weight of the adsorbent.

15. Process according to Claim 14, **characterized in that** it comprises the use of a treatment cycle comprising the stages:
a) passing the contaminated gas flow into an adsorption region comprising a bed of drying agent and a bed of adsorbent as defined in Claim 14,
b) desorbing the adsorbed CO₂ by establishing a pressure gradient and gradually reducing the pressure in the said adsorption region in order to recover the CO₂ via the inlet into the adsorption region,
c) increasing the pressure in the said adsorption region by introducing a pure gas stream via the outlet of the adsorption region.
